# EUROPÄISCHE PATENTSCHRIFT

(11) **EP 1 343 618 B1**
(45) Veröffentlichungstag und Bekanntmachung des Hinweises auf die Patenterteilung: **06.10.2004**
(21) Anmeldenummer: 01990308.7
(22) Anmeldetag: 19.12.2001
(51) Int. Cl.: B29C 45/00, B29C 45/16

(54) **VERFAHREN ZUR HERSTELLUNG EINES GEHÄUSES EINES MOBILEN KOMMUNIKATIONS-ENDGERÄTES, GEHÄUSE UND MOBILES KOMMUNIKATIONS-ENDGERÄT**
METHOD FOR PRODUCING A HOUSING OF A MOBILE COMMUNICATION TERMINAL, HOUSING AND MOBILE COMMUNICATION TERMINAL
PROCEDE DE PRODUCTION D'UN BOITIER DESTINE A UN TERMINAL DE COMMUNICATION MOBILE, UN TEL BOITIER ET TERMINAL DE COMMUNICATION MOBILE

(30) Priorität: 20.12.2000 DE 10063696
(43) Veröffentlichungstag der Anmeldung: 17.09.2003
(73) Patentinhaber: SIEMENS AKTIENGESELLSCHAFT, 80333 München (DE)
(72) Erfinder: GAHL, Andreas, 81369 München (DE); JOCHHEIM, Edgar, 81379 München (DE); SCHREIBER, Michael, 85655 Aying-Göggenhofen (DE)
(86) Internationale Anmeldenummer: PCT/DE2001/004780
(87) Internationale Veröffentlichungsnummer: WO 2002/049823

(56) Entgegenhaltungen:
- WO-A-99/67851
- DE-A- 4 416 986
- GB-A- 2 345 022
- GB-A- 2 345 196
- US-A- 4 585 686

## Beschreibung

Die Erfindung betrifft ein Verfahren zur Herstellung eines Gehäuses eines mobilen Kommunikations-Endgerätes, insbesondere eines Mobilfunk-Endgeräts, eines Schnurlostelefons oder dergleichen, nach dem Oberbegriff von Anspruch 1.

Ein solches Verfahren zur Herstellung eines Gehäuses ist für ein Gehäuseteil aus der WO 99/67851 A1 bekannt.

Zum einschlägigen Stand der Technik gehört auch die GB 2 345 022 A, in der ein Verfahren zum Herstellen eines Antennenkörpers für ein Telefon beschrieben ist. Dieser Antennenkörper bildet nicht einen Teil des Gehäuses des Mobiltelefons. Zur Ausbildung einer Antennenstruktur ist eine äußere Harzschicht für metallisches Material anziehend, so dass auf dem Antennenkörper eine Antennenstruktur gebildet werden kann.

Bei der Herstellung eines mobilen Kommunikations-Endgerätes ist es erforderlich, eine Sende- oder/und Empfangsantenne zum Senden und Empfangen von Informationen bereitzustellen. Diese Antenne muss in ihrer Geometrie an das Frequenzband angepaßt sein, in welchem das mobile Kommunikations-Endgerät Informationen aussendet bzw. empfängt. Des Weiteren ist es erforderlich, daß bei der Herstellung von mobilen Kommunikations-Endgeräten in großen Stückzahlen die einzelnen Antennen unter Vermeidung von Maßabweichungen jeweils identische Geometrie aufweisen. Dies rührt daher, daß die Sende- und Empfangselektronik des Mobilfunk-Endgeräts auf die jeweilige Antennengeometrie eingestellt werden muß. Fertigungsbedingte Abweichungen von einer vorgegebenen Antennengeometrie erfordern somit eine individuelle Anpassung der Sende- und Empfangselektronik bei jedem einzelnen Kommunikations-Endgerät, was einen unzumutbaren Aufwand bei der Fertigung hoher Stückzahlen bedeuten würde.

Um die vorstehend beschriebenen Anforderungen zu erfüllen, werden herkömmlicherweise Antennenbaugruppen hergestellt, welche bei der Montage des mobilen Kommunikations-Endgeräts in das Gehäuse eingesetzt werden. Dabei kann es sich um an dem Gehäuse fixierbare externe Helixantennen oder Stabantennen handeln, welche die Gehäuseabmessungen vergrößern und das optische Erscheinungsbild des mobilen Kommunikations-Endgerätes beeinträchtigen. Ferner ist es möglich, flächige Antennen in das Gehäuse einzulegen, so daß diese nach der Montage des mobilen Kommunikations-Endgerätes von einem Betrachter nicht zu erkennen sind. Derartige flächige Antennen, auch Patch-Antennen genannt, sind im Stand der Technik in Form von vorab hergestellten, flächigen Metallkörpern ausgeführt, welche direkt in das Gehäuse eingelegt werden oder auf gesonderten Antennenkörpern befestigt und zusammen mit diesen in dem Gehäuse angebracht werden. Derartige Patch-Antennen erfordern zusätzlichen Bauraum in dem Gehäuse des mobilen Kommunikations-Endgeräts. Das Gehäuse muß in seiner Geometrie an derartige Patch-Antennen angepaßt werden, was zu einer Beeinträchtigung des äußeren Erscheinungsbilds und der Ergonomie des mobilen Kommunikations-Endgerätes führen kann.

Darüber hinaus müssen an dem Gehäuse konstruktive Vorkehrungen getroffen werden, um einen hinreichend großen Abstand zwischen der Patch-Antenne und der Masse der Sendeund Empfangselektronik des Kommunikations-Endgeräts zu gewährleisten, da es nur bei hinreichend großem Abstand möglich ist, eine Antenne mit ausreichend großer Bandbreite zu realisieren.

Es ist demgegenüber eine Aufgabe der vorliegenden Erfindung, ein Verfahren der eingangs bezeichneten Art bereitzustellen, mit welchem sich eine leistungsfähige Antenne mit reproduzierbarer Geometrie angepaßt an die konstruktiven Gegebenheiten des Gehäuses raumsparend herstellen läßt.

Diese Aufgabe wird durch ein Verfahren zur Herstellung eines Gehäuses eines mobilen Kommunikations-Endgerätes, insbesondere eines Mobilfunk-Endgerätes, eines Schnurlostelefons oder dergleichen, mit wenigstens einer integral an dem Gehäuse ausgebildeten Antenne zum Senden oder/und Empfangen von Signalen gelöst, wobei das erfindungsgemäße Verfahren die Schritte des Anspruchs 1 umfaßt.

Erfindungsgemäß wird zunächst ein Gehäuserohling aus einem elektrisch nicht leitenden Material hergestellt, an welchem Gehäuserohling ein von der Antenne einzunehmender Antennenbereich vorgesehen wird. Für diesen Antennenbereich muß nicht, wie bei herkömmlichen im Inneren des Kommunikations-Endgerät-Gehäuses angeordneten flächigen zweidimensionalen Patch-Antennen, zusätzlicher Bauraum für die Antenne bereitgestellt werden. Es ist vielmehr möglich - da im Schritt B) der Gehäuserohling in dem Antennenbereich integral mit elektrisch leitendem Antennenmaterial versehen wird - an dem Gehäuserohling einen gegebenenfalls dreidimensionalen flächigen Bereich als Antennenbereich bereitzustellen, welcher dann unmittelbar mit elektrisch leitendem Antennenmaterial versehen werden kann. Die Erfindung hat den weiteren Vorteil, daß das Antennenmaterial in größtmöglichen Abstand zu der Sende- und Empfangselektronik im Gehäuse angeordnet ist, so daß gute Empfangseigenschaften erreicht werden können.

Erfindungsgemäß ist in Schritt B vorgesehen, daß die Oberfläche des Gehäuserohlings in dem an diesem vorgesehenen Antennenbereich selektiv metallisiert wird. Dies bedeutet, daß auf den Gehäuserohling im Antennenbereich eine Metallschicht aufgetragen werden kann, welche dann bei dem Einsetzen der Sende- und Empfangs-Elektronik kontaktiert wird und als Antenne wirksam wird.

Gemäß der Erfindung ist es vorgesehen, daß der Antennenbereich durch wenigstens eine in dem Gehäuserohling vorgesehene Vertiefung oder Ausnehmung ausgebildet wird, deren Geometrie der Geometrie der wenigstens einen Antenne entspricht. Dabei kann die Vertiefung lediglich geringe Tiefe aufweisen, so daß diese bei Betrachtung des Gehäuserohlings von seiner außen liegenden Sichtseite her nicht zu erkennen ist. Beim Bereitstellen einer Ausnehmung muß diese in Schritt B oder nachfolgend geschlossen werden, worauf später noch im Detail eingegangen wird.

Aufgrund der zum Teil komplizierten Gehäusegeometrie und der hohen Stückzahlen bei mobilen Kommunikations-Endgeräten bietet sich eine Herstellung des Gehäuserohlings aus Kunststoff an, insbesondere durch ein Spritzgießverfahren. In einer Weiterbildung der Erfindung kann in diesem Zusammenhang vorgesehen sein, daß die Schritte A und B durch ein Zwei-Komponenten-Spritzgieß-Verfahren erfolgen, wobei in Schritt A als erste Komponente ein elektrisch nichtleitendes Kunststoffmaterial zu dem Gehäuserohling verarbeitet wird und wobei in Schritt B als zweite Komponente ein leitendes Kunststoffmaterial in den Antennenbereich eingespritzt wird. Dabei wird zunächst eine Form mit der ersten Komponente gefüllt. In diese Form ist ein entfernbarer Kern eingesetzt, welcher dafür sorgt, daß der Antennenbereich nicht mit der ersten Komponente gefüllt wird. Nach partiellem oder vollständigem Aushärten der ersten Komponente wird dann der entfernbare Kern derart aus der Form entfernt, daß sich eine dem Antennenbereich entsprechende Kavität ausbildet. Sodann wird diese dem Antennenbereich entsprechende Kavität mit der zweiten Komponente gefüllt. Nach dem Aushärten der beiden Komponenten wird das Gehäuse aus der Form entnommen. Die Antenne ist somit integral in dem Gehäuse ausgebildet. Ein wesentlicher Vorteil dieses Verfahrens liegt in der hohen Wiederholgenauigkeit hinsichtlich der Gehäuse- und Antennengeometrie. Ferner lassen sich mit diesem Verfahren in einfacher Weise dreidimensionale Antennenstrukturen erreichen, welche in hohen Stückzahlen eine wirtschaftliche und effiziente Ausnutzung des für die Antenne zur Verfügung stehenden Bauraums gewährleisten.

Alternativ zu dem vorstehend beschriebenen Zwei-Komponenten-Spritzgießverfahren kann in Schritt B in einer Weiterbildung der Erfindung vorgesehen sein, daß das elektrisch leitende Material durch Heißprägen auf den Gehäuserohling aufgebracht wird. Bei diesem Herstellungsverfahren werden in Schritt B die folgenden Unterschritte ausgeführt:
B1) Auflegen eines überdimensionierten, flächigen, elektrisch leitenden Materials auf den Antennenbereich,
B2) flächiges Andrücken des elektrisch leitenden Materials an der Oberfläche des Gehäuserohlings mittels eines nach Maßgabe der Geometrie des Antennenbereichs ausgebildeten Stempels,
B3) lokales Aufschmelzen des Gehäuserohling-Materials an der mit dem elektrisch leitenden Material in Berührung stehenden Oberfläche im Bereich des Stempels,
B4) Aushärten des aufgeschmolzenen Gehäuserohling-Materials und
B5) Entfernen des über den Antennenbereich überstehenden elektrisch leitenden Materials.

In Schritt B1 wird beispielsweise als elektrisch leitendes Material ein Metallfolienmaterial verwendet, insbesondere aus reinem Kupfer oder aus mit Sn, Pb, Ni, Ag und/oder Au beschichtetem Kupfer. Dieses flächige elektrisch leitende Material wird dann über die Fläche des Antennenbereichs vollständig oder lediglich bereichsweise mit einem Stempel mit zu dem Antennenbereich korrespondierender Geometrie angedrückt. Vorzugsweise ist der Stempel beheizbar ausgebildet und wird während des Andrückens des flächigen elektrisch leitenden Materials derart erwärmt, daß das Gehäuserohling-Material lokal oberflächlich aufschmilzt. Danach kann der aufgeschmolzene Bereich durch aktive oder passive Kühlung wieder aushärten, wobei beim Aushärten das flächige elektrisch leitende Material durch Adhäsion an dem ausgehärteten Gehäuserohling-Material anhaftet. Während oder nach dem Aushärten kann der Stempel entfernt werden. Schließlich wird in Schritt B5 das über den Antennenbereich überstehende elektrisch leitende Material durch nachfolgende mechanische Bearbeitung, beispielsweise durch einen Schneideschritt, entfernt. In einer vorteilhaften Weiterbildung der Erfindung wird als flächiges elektrisch leitendes Material ein sprödes Metallmaterial verwendet, welches sich in seinen über den Antennenbereich hinausstehenden Abschnitt nach dem Aushärten des aufgeschmolzenen Gehäuserohling-Materials aufgrund seiner Sprödheit unter geringem mechanischen Aufwand abbrechen, abreißen oder anderweitig entfernen läßt.

Als weitere Alternative für Schritt B kann vorgesehen sein, daß der Gehäuserohling im Antennenbereich durch Laserstrukturieren mit elektrisch leitendem Material versehen wird. Bei dieser Erfindungsvariante kann der Schritt B die folgenden Unterschritte umfassen:
B1) Auftragen eines elektrisch leitenden Materials im Antennenbereich und in dem diesen umgebenden Bereich und
B2) Entfernen des elektrisch leitenden Materials in dem den Antennenbereich umgebenden Bereich durch lokales Verbrennen mittels eines Laserstrahls.

Bei dieser Erfindungsvariante wird zunächst im Antennenbereich elektrisch leitendes Material aufgetragen. Dabei kann es sich um einen elektrisch leitenden Lack handeln, welcher auf die Innenseite des Gehäuserohlings aufgetragen wird. Alternativ kann es sich bei dem elektrisch leitenden Material auch um ein galvanisch auf die Oberfläche des Gehäuserohlings aufgetragenes Metall handeln. In beiden Fällen kann es von Vorteil sein, wenn - wie vorstehend bereits angedeutet - in dem Gehäuserohling eine Vertiefung vorgesehen ist, in welcher sich der aufgetragene elektrisch leitende Lack oder das galvanisch aufgetragene elektrisch leitende Material überwiegend sammeln. Nach dem Auftragen des elektrisch leitenden Materials gemäß dem Schritt B1 läßt man dieses aushärten. Daraufhin wird das elektrisch leitende Material in dem den Antennenbereich umgebenden Bereich mittels eines Laserstrahls lokal verbrannt. Diese Variante des Herstellungsverfahrens gewährleistet eine exakte Einhaltung der Antennengeometrie, da zunächst das elektrisch leitende Material im Überschuß auf die Oberfläche des Gehäuserohlings aufgetragen wird und anschließend die Antennenkontur exakt, gegebenenfalls rechnerunterstützt, mit Hilfe des Laserstrahls festgelegt wird.

Alternativ zu den vorstehend beschriebenen Varianten hinsichtlich des Schritts B, nämlich dem Zwei-Komponenten-Spritzgießen, dem Heißprägen mittels eines Metallfolienmaterials und dem Laserstrukturieren, kann bei einer weiteren Variante des erfindungsgemäßen Verfahrens vorgesehen sein, daß Schritt B die Unterschritte umfaßt:
B1) Auflegen einer Maske auf den Gehäuserohling, wobei die Maske eine Antennenausnehmung aufweist, deren Geometrie zu der Geometrie des Antennenbereichs korrespondiert,
B2) Auftragen eines elektrisch leitenden Materials auf die Maske im Bereich der Antennenausnehmung, derart, daß der Antennenbereich des Gehäuserohlings vollständig mit aufgetragenem elektrisch leitendem Material bedeckt ist und
B3) Entfernen der Maske.

In Schritt B1 wird dabei auf den bereits hergestellten Gehäuserohling eine an diesen angepaßte Maske vorzugsweise in einer vorbestimmten Lage aufgelegt. In Schritt B2 können, wie bereits vorstehend für das Laserstrukturieren vorgeschlagen, ein elektrisch leitender Lack oder ein elektrisch leitendes Material durch galvanisches Aufbringen auf den Gehäuserohling und die Maske aufgetragen werden. Nach Entfernen der Maske ist lediglich der von der Maske nicht bedeckte Antennenbereich mit dem elektrisch leitenden Material versehen. Auch bei dieser Erfindungsvariante ist es möglich, das Gehäuse vorab mit einer Vertiefung zu versehen, in welcher sich dann das aufgetragene elektrisch leitende Material sammelt. Es ist jedoch darauf zu achten, daß in diesem Fall die Vertiefung exakt mit der Antennenausnehmung der Maske fluchtet.

Als weitere Alternative hinsichtlich der Realisierung von Schritt B kann erfindungsgemäß vorgesehen sein, daß Schritt B die Unterschritte umfaßt:
B1) Auflegen einer Maske auf den Gehäuserohling, wobei die Maske eine Antennenausnehmung aufweist, deren Geometrie zu der Geometrie des Antennenbereichs korrespondiert,
B2) Auftragen eines belichtungsaktivierbaren Materials, insbesondere ein elektrophoretischer Photoresist, auf die Maske im Bereich der Antennenausnehmung, derart, daß der Antennenbereich des Gehäuserohlings vollständig mit aufgetragenem belichtungsaktivierbaren Material bedeckt ist, wobei das belichtungsaktivierbare Material durch Belichtung in einen leitenden Zustand versetzbar ist,
B3) Belichten des aufgetragenen belichtungsaktivierbaren Materials und
B4) Entfernen der Maske.

Statt wie vorangehend elektrisch leitender Lack oder galvanisch aufgetragenes elektrisch leitendes Material, wird bei dieser Ausführungsform der Erfindung belichtungsaktivierbares Material auf dem Gehäuserohling aufgetragen, welches durch die Belichtung in einen leitenden Zustand versetzbar ist und an dem Gehäuserohling fixierbar ist. Die Fixierung kann nach einem der Schritte B2, B3 oder B4 erfolgen. Es empfiehlt sich jedoch eine Fixierung vor Entfernen der Maske, da beim Entfernen der Maske durch die dabei erforderlichen mechanischen Einwirkungen die Geometrie der Antenne verändert oder zerstört werden könnte.

Die Erfindung betrifft ferner ein Gehäuse für ein mobiles Kommunikations-Endgerät, insbesondere ein Mobilfunk-Endgerät, ein Schnurlostelefon oder dergleichen, mit wenigstens einer integral an dem Gehäuse ausgebildeten Antenne zum Senden oder/und Empfangen von Signalen, wobei das Gehäuse mit dem Verfahren der vorstehend beschriebenen Art hergestellt ist.

Darüber hinaus betrifft die Erfindung ein mobiles Kommunikations-Endgerät, insbesondere ein Mobilfunk-Endgerät, ein Schnurlostelefon oder dergleichen, mit einem erfindungsgemäß hergestellten Gehäuse und wenigstens einer integral an dem Gehäuse ausgebildeten Antenne zum Senden oder/und Empfangen von Signalen, wobei das Gehäuse mit dem Verfahren der vorstehend beschriebenen Art hergestellt ist.

Im folgenden werden Ausführungsbeispiele der vorliegenden Erfindung anhand der beiliegenden Zeichnungen beschrieben. Es stellen dar:
- Figur 1: eine photografische Teildraufsicht eines erfindungsgemäßen Gehäuses eines Mobilfunk-Endgerätes;
- Figur 2: einen Schnitt entlang II-II einer Ausführungsform der Erfindung;
- Figur 3: eine Schnittdarstellung entsprechend Figur 2 eines Gehäuserohlings mit im Antennenbereich vorgesehenen Ausnehmungen und
- Figur 4: eine Figur 3 entsprechende Schnittdarstellung mit elektrisch leitendem Antennenmaterial.

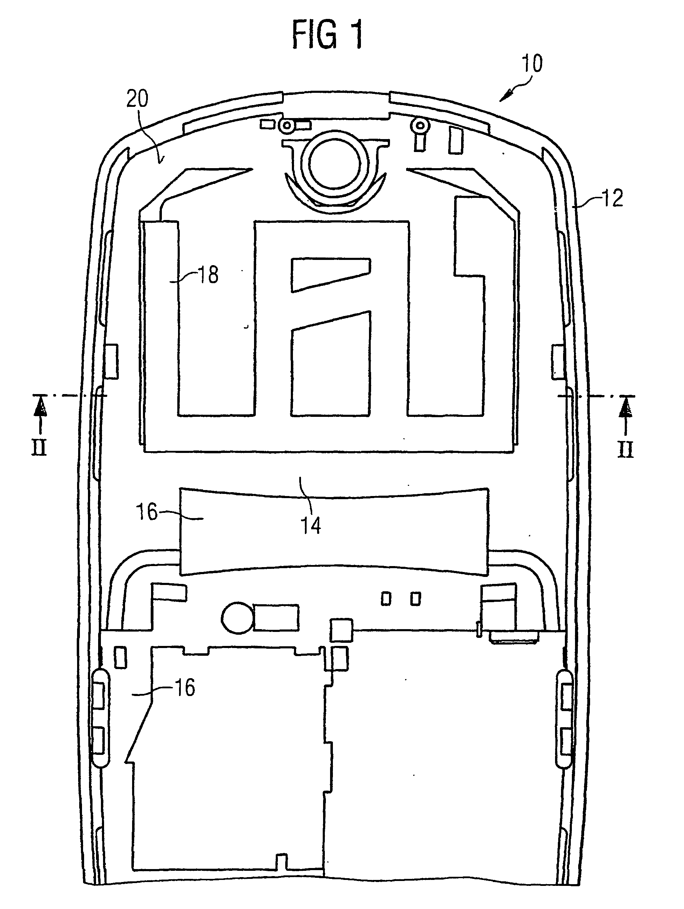

In Figur 1 ist eine erfindungsgemäße Gehäuseschale allgemein mit 10 bezeichnet. Diese umfaßt einen Rand 12 und einen von dem Rand 12 umgebenen Innenbereich 14. In den Innenbereich 14 sind Komponenten 16 der Sende- und Empfangselektronik eingesetzt, in dem in Figur 1 oberen Bereich ist ferner eine Sende- und Empfangsantenne 18 vorgesehen. Diese Sende- und Empfangsantenne 18 ist von einer auf die Innenoberfläche 20 der Gehäuseschale 10 aufgetragenen leitenden Schicht gebildet.

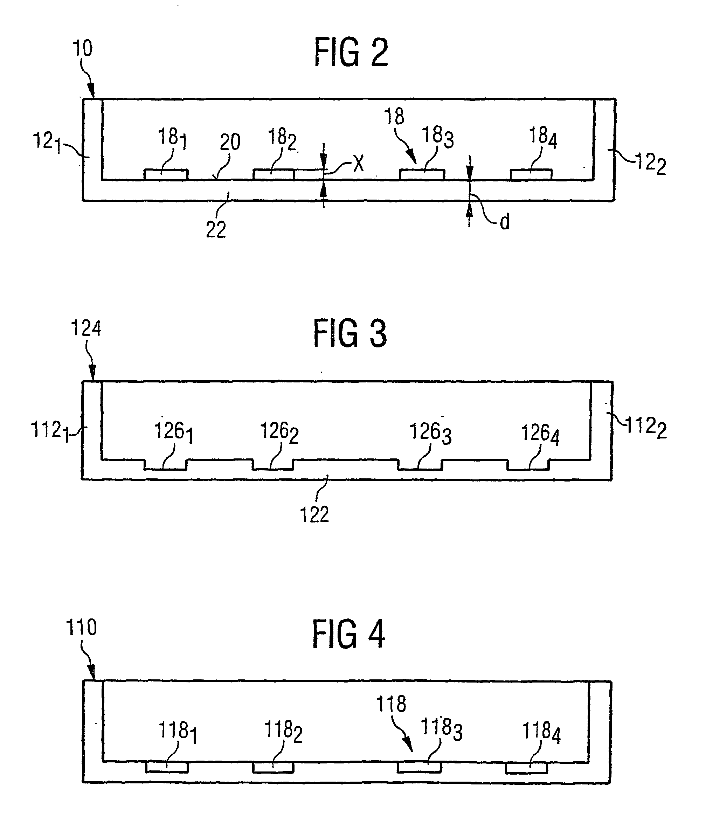

Zur weiteren Beschreibung der Sende- und Empfangsantenne 18 sowie der möglichen Verfahren zum Aufbringen der Sende- und Empfangsantenne auf die Gehäuseschale 10 wird auf die Figuren 2 bis 4 eingegangen. Figur 2 zeigt eine Schnittdarstellung der Gehäuseschale 10, geschnitten entlang der Schnittlinie II-II, wie in Figur 1 dargestellt. Wie in Figur 2 gezeigt, umfaßt die Gehäuseschale 10 zwei Randabschnitte 12₁ und 12₂ sowie einen Bodenabschnitt 22. Auf der Innenoberfläche 20 ist, wie bereits mit Bezug auf Figur 1 beschrieben, integral die Sende- und Empfangsantenne 18 aufgebracht, wobei Teilbereiche 18₁, 18₂, 18₃ und 18₄ der Sende- und Empfangsantenne 18 im Schnitt dargestellt sind. Diese sind derart auf die Innenoberfläche 20 des Bodenbereichs 22 der Gehäuseschale 10 aufgetragen, daß sie von diesem um eine geringe Höhe x vorstehen. Es ist darauf hinzuweisen, daß die Höhe x in Figur 2 nicht maßstäblich dargestellt ist sondern übertrieben groß, um das Wesen der Erfindung deutlicher zu machen. Tatsächlich liegt die Höhe x im Bereich von wenigen µm bei galvanischen Oberflächen bis zu 150 µm bei Metallfolien, wohingegen die Materialstärke d der Gehäuseschale 12 im Bereich von einigen mm liegt.

Für die Sende- und Empfangsantenne 18 wird ein elektrisch leitendes Material verwendet, beispielsweise ein elektrisch leitender Lack, ein Metall, oder ein elektrisch leitender Kunststoff, welcher bzw. welches bei der Herstellung der Gehäuseschale 10 integral auf dem Bodenbereich 22 aufgebracht wird. Dies kann beispielsweise dadurch erfolgen, daß die Innenoberfläche 20 des Bodenbereichs 22 durch galvanisches Auftragen mit einer Metallschicht versehen wird, welche Metallschicht bereits die Kontur der Sende- und Empfangsantenne 18 aufweist oder welcher Metallschicht nachträglich durch Nachbearbeitung die Kontur der Sende- und Empfangsantenne 18, wie in Figur 1 in der Draufsicht dargestellt, verliehen wird.

Figuren 3 und 4 zeigen zwei Zustände bei der Vorgehensweise nach dem erfindungsgemäßen Verfahren. Um Wiederholungen zu vermeiden werden im folgenden dieselben Bezugszeichen wie in Figuren 1 und 2 verwendet, jedoch ergänzt um die Zahl 100.

Figur 3 zeigt einen Gehäuserohling 124 mit Randabschnitten 112₁ und 112₂ sowie dem Bodenbereich 122. In dem Bodenbereich 122 sind im Querschnitt rechteckige Vertiefungen 126₁, 126₂, 126₃ und 126₄ eingebracht. Ein derartiger Gehäuserohling 124 kann beispielsweise durch ein Spritzgießverfahren hergestellt werden, bei welchem ein nichtleitendes Kunststoffmaterial in eine zu dem Gehäuserohling 124 korrespondierende Form mit den Vertiefungen 126₁ bis 126₄ entsprechenden Formbereichen eingespritzt wird.

Der Gehäuserohling 124 gemäß Figur 3 wird dann einem weiteren Fertigungsschritt unterzogen, in welchem die Vertiefungen 126₁ bis 126₄ mit einem elektrisch leitenden Material gefüllt werden, um die Antenne 118 mit ihren in Figur 4 erkennbaren Antennenbereichen 118₁, 118₂, 118₃ und 118₄ auszubilden.

Dies kann beispielsweise dadurch erfolgen, daß ein elektrisch leitender Lack in die Vertiefungen 126₁ bis 126₄ eingefüllt wird oder daß ein Metall galvanisch in diesen Vertiefungen aufgebracht wird.

Nach Versehen des Gehäuserohlings 124 mit den Antennenabschnitten 118₁ bis 118₄ zur Ausbildung der Antenne 118 erhält man die Gehäuseschale 110, welche dann bei der Endmontage eines Mobilfunkendgeräts weiter verarbeitet werden kann. Bei dieser Endmontage ist es lediglich erforderlich, die integral in der Gehäuseschale 110 ausgebildete Antenne 118 durch entsprechende Kontakte mit der Sende- und Empfangselektronik zu verbinden.

Die vorstehend beschriebene Erfindung zeigt einen Weg, wie eine flächige Patch-Antenne bei einem mobilen Kommunikations-Endgerät integral an einem Gehäuseteil angebracht werden kann und dadurch Vorteile bei der Fertigung von mobilen Kommunikations-Endgeräten mit großen Stückzahlen erreicht werden können. Mit dem vorstehend beschriebenen Verfahren lassen sich Patch-Antennen dreidimensionaler Struktur in einem herkömmlichen Gehäuse unter effektiver Raumausnutzung ausbilden. Dadurch lassen sich konstruktive Maßnahmen, die bei der Unterbringung von als gesonderte Teile ausgebildeten herkömmlichen Patch-Antennen erforderlich waren, sowie zusätzliche Montageschritte vermeiden. Mit den vorstehend beschriebenen Verfahren lassen sich Gehäuseschalen mit Patch-Antennen in hohen Stückzahlen mit hinreichend guter Wiederholgenauigkeit hinsichtlich der einzuhaltenden Antennengeometrie herstellen.

## Patentansprüche

1. Verfahren zur Herstellung eines Gehäuses (10; 110) eines mobilen Kommunikations-Endgeräts, insbesondere eines Mobilfunk-Endgeräts, eines Schnurlostelefons oder dergleichen, mit wenigstens einer integral an dem Gehäuse (10; 110) ausgebildeten Antenne (18; 118) zum Senden oder/und Empfangen von Signalen, wobei das Verfahren die Schritte umfasst:
A) Herstellen eines Gehäuserohlings (124) aus einem elektrisch nicht leitenden Material mit einem von der Antenne (18; 118) einzunehmenden Antennenbereich (126₁, 126₂, 126₃, 126₄) und
B) Versehen des Gehäuserohlings (124) in dem Antennenbereich mit elektrisch leitendem Antennenmaterial (118₁, 118₂, 118₃, 118₄).
**dadurch gekennzeichnet,**
**dass** in Schritt B die Oberfläche (20) des Gehäuserohlings in dem an diesem vorgesehenen Antennenbereich selektiv metallisiert wird und
**dass** der Antennenbereich durch wenigstens eine in dem Gehäuserohling (124) vorgesehene Vertiefung (126₁, 126₂, 126₃, 126₄) oder Ausnehmung ausgebildet wird, deren Geometrie der Geometrie der wenigstens einen Antenne (118) entspricht.

2. Verfahren nach einem der vorangehenden Ansprüche,
**dadurch gekennzeichnet,**
**dass** der Gehäuserohling (124) aus Kunststoff, insbesondere durch Spritzgießen, hergestellt wird.

3. Verfahren nach einem der vorangehenden Ansprüche,
**dadurch gekennzeichnet,**
**dass** die Schritte A und B durch ein Zwei-Komponenten-Spritzgieß-Verfahren erfolgen, wobei in Schritt A als erste Komponente ein elektrisch nichtleitendes Kunststoffmaterial zu dem Gehäuserohling verarbeitet wird und wobei in Schritt B als zweite Komponente ein leitendes Kunststoffmaterial in dem Antennenbereich aufgebracht wird.

4. Verfahren nach einem der Ansprüche 1 bis 3,
**dadurch gekennzeichnet,**
**dass** in Schritt B das elektrisch leitende Material (118₁, 118₂, 118₃, 118₄) durch Heißprägen auf den Gehäuserohling aufgebracht wird.

5. Verfahren nach Anspruch 4,
**dadurch gekennzeichnet ,**
**dass** Schritt B die Unterschritte umfasst:
B1) Auflegen eines überdimensionierten, flächigen, elektrisch leitenden Materials auf den Antennenbereich,
B2) flächiges Andrücken des elektrisch leitenden Materials an der Oberfläche des Gehäuserohlings mittels eines nach Maßgabe der Geometrie des Antennenbereichs ausgebildeten Stempels,
B3) lokales Aufschmelzen des Gehäuserohling-Materials an der mit dem elektrisch leitenden Material in Berührung stehenden Oberfläche im Bereich des Stempels,
B4) Aushärten des aufgeschmolzenen Gehäuserohling-Materials und
B5) Entfernen des über den Antennenbereich überstehenden elektrisch leitenden Materials.

6. Verfahren nach Anspruch 5,
**dadurch gekennzeichnet,**
**dass** das elektrisch leitende Material im Schritt B1 ein Metallfolienmaterial, insbesondere aus reinem Kupfer oder aus mit Sn, Pb, Ni, Ag und/oder Au beschichtetem Kupfer, ist.

7. Verfahren nach einem der Ansprüche 1 oder 2,
**dadurch gekennzeichnet,**
**dass** in Schritt B der Gehäuserohling im Antennenbereich durch Laserstrukturieren mit elektrisch leitendem Material versehen wird.

8. Verfahren nach Anspruch 7,
**dadurch gekennzeichnet ,**
**dass** Schritt B die Unterschritte umfasst:
B1) Auftragen eines elektrisch leitenden Materials im Antennenbereich in dem diesen umgebenden Bereich und
B2) Entfernen des elektrisch leitenden Materials in dem den Antennenbereich umgebenden Bereich durch lokales Verbrennen mittels eines Laserstrahls.

9. Verfahren nach Anspruch 8,
**dadurch gekennzeichnet,**
**dass** in Schritt B1 ein elektrisch leitender Lack im Antennenbereich aufgetragen wird.

10. Verfahren nach Anspruch 8,
**dadurch gekennzeichnet,**
**dass** in Schritt B1 das elektrisch leitende Material, insbesondere ein Metall, galvanisch aufgetragen wird.

11. Verfahren nach einem der Ansprüche 1 oder 2,
**dadurch gekennzeichnet,**
**dass** Schritt B) die Unterschritte umfasst:
B1) Auflegen einer Maske auf den Gehäuserohling, wobei die Maske eine Antennenausnehmung aufweist, deren Geometrie zu der Geometrie des Antennenbereichs korrespondiert,
B2) Auftragen eines elektrisch leitenden Materials auf die Maske im Bereich der Antennenausnehmung, derart, dass der Antennenbereich des Gehäuserohlings vollständig mit aufgetragenem elektrisch leitendem Material bedeckt ist und
B3) Entfernen der Maske.

12. Verfahren nach Anspruch 11,
**dadurch gekennzeichnet,**
**dass** in Schritt B2 ein elektrisch leitender Lack auf die Maske aufgetragen wird.

13. Verfahren nach Anspruch 11,
**dadurch gekennzeichnet,**
**dass** in Schritt B2 das elektrisch leitende Material, insbesondere Metall, galvanisch aufgetragen wird.

14. Verfahren nach einem der Ansprüche 1 oder 2,
**dadurch gekennzeichnet,**
**dass** Schritt B) die Unterschritte umfasst:
B1) Auflegen einer Maske auf den Gehäuserohling, wobei die Maske eine Antennenausnehmung aufweist, deren Geometrie zu der Geometrie des Antennenbereichs korrespondiert,
B2) Auftragen eines belichtungsaktivierbaren Materials, insbesondere ein elektrophoretischer Photoresist, auf die Maske im Bereich der Antennenausnehmung, derart, dass der Antennenbereich des Gehäuserohlings vollständig mit aufgetragenem belichtungsaktivierbaren Material bedeckt ist, wobei das belichtungsaktivierbare Material durch Belichtung in einen leitenden Zustand versetzbar ist,
B3) Belichten des aufgetragenen Materials und
B4) Entfernen der Maske.

15. Verfahren nach Anspruch 14,
**dadurch gekennzeichnet,**
**dass** nach einem der Schritte B2), B3) oder B4) das aufgetragene Material an dem Gehäuserohling fixiert wird.

16. Gehäuse (10; 110) für ein mobiles Kommunikations-Endgerät, insbesondere ein Mobilfunk-Endgerät, ein Schnurlostelefon oder dergleichen, mit wenigstens einer integral an dem Gehäuse (10; 110) ausgebildeten Antenne (18; 118) zum Senden oder/und Empfangen von Signalen, wobei das Gehäuse (10; 110) mit dem Verfahren nach einem der vorangehenden Ansprüche hergestellt ist.

17. Mobiles Kommunikations-Endgerät, insbesondere Mobilfunk-Endgerät, Schnurlostelefon oder dergleichen, mit einem Gehäuse (10; 110) und wenigstens einer integral an dem Gehäuse ausgebildeten Antenne (18; 118) zum Senden oder/und Empfangen von Signalen, wobei das Gehäuse (10; 110) mit dem Verfahren nach einem der Ansprüche 1 bis 15 hergestellt ist.

## Claims

1. Method for producing a housing (10; 110) of a mobile communication terminal, especially a mobile radio terminal, a cordless telephone or the like, with at least one antenna (18; 118) for transmitting or/and receiving signals which is integrally formed on the housing (10; 110), the method comprising the steps of:
A) producing a housing blank (124) from an electrically non-conducting material with an antenna zone (126₁, 126₂, 126₃, 126₄) to be taken up by the antenna (18; 118) and
B) providing the housing blank (124) with electrically conducting antenna material (118₁, 118₂, 118₃, 118₄) in the antenna zone,
**characterized**
**in that** in step B the surface (20) of the housing blank is selectively metallized in the antenna zone provided on the latter and
**in that** the antenna zone is formed by at least one depression (126₁, 126₂, 126₃, 126₄) or recess which is provided in the housing blank (124) and the geometry of which corresponds to the geometry of the at least one antenna (118).

2. Method according to one of the preceding claims, **characterized in that** the housing blank (124) is produced from plastic, especially by injection moulding.

3. Method according to one of the preceding claims, **characterized in that** steps A and B are performed by a two-component injection-moulding process, with an electrically non-conducting plastics material being processed in step A to form the housing blank, as the first component, and a conducting plastics material being applied in the antenna zone in step B, as the second component.

4. Method according to one of Claims 1 to 3, **characterized in that** in step B the electrically conducting material (118₁, 118₂, 118₃, 118₄) is applied to the housing blank by hot stamping.

5. Method according to Claim 4, **characterized in that** step B comprises the substeps of:
B1) placement of an overdimensioned, planar, electrically conducting material onto the antenna zone,
B2) planar pressing of the electrically conducting material on the surface of the housing blank by means of a die formed in accordance with the geometry of the antenna zone,
B3) local melting of the housing blank material on the surface in contact with the electrically conducting material in the region of the die,
B4) curing of the melted housing blank material and
B5) removal of the electrically conducting material extending beyond the antenna zone.

6. Method according to Claim 5, **characterized in that** the electrically conducting material in step B1 is a metal foil material, especially of pure copper or of copper coated with Sn, Pb, Ni, Ag and/or Au.

7. Method according to either of Claims 1 and 2, **characterized in that** in step B the housing blank is provided with electrically conducting material in the antenna zone by laser structuring.

8. Method according to Claim 7, **characterized in that** step B comprises the substeps of:
B1) application of an electrically conducting material in the antenna zone in the zone surrounding the latter and
B2) removal of the electrically conducting material in the zone surrounding the antenna zone by local burning by means of a laser beam.

9. Method according to Claim 8, **characterized in that** in step B1 an electrically conducting lacquer is applied in the antenna zone.

10. Method according to Claim 8, **characterized in that** in step B1 the electrically conducting material, especially a metal, is electrodeposited.

11. Method according to either of Claims 1 and 2, **characterized in that** step B) comprises the substeps of:
B1) placement of a mask onto the housing blank, the mask having an antenna recess of a geometry which corresponds to the geometry of the antenna zone,
B2) application of an electrically conducting material to the mask in the zone of the antenna recess in such a way that the antenna zone of the housing blank is completely covered with applied electrically conducting material and
B3) removal of the mask.

12. Method according to Claim 11, **characterized in that** in step B2 an electrically conducting lacquer is applied to the mask.

13. Method according to Claim 11, **characterized in that** in step B2 the electrically conducting material, especially metal, is electrodeposited.

14. Method according to either of Claims 1 and 2, **characterized in that** step B) comprises the substeps of:
B1) placement of a mask onto the housing blank, the mask having an antenna recess of a geometry which corresponds to the geometry of the antenna zone,
B2) application of an exposure-activatable material, especially an electrophoretic photoresist, to the mask in the zone of the antenna recess in such a way that the antenna zone of the housing blank is completely covered with applied exposure-activatable material, the exposure-activatable material being able to be transformed into a conducting state by exposure,
B3) exposure of the applied material and
B4) removal of the mask.

15. Method according to Claim 14, **characterized in that** the applied material on the housing blank is fixed after one of the steps B2), B3) or B4).

16. Housing (10; 110) for a mobile communication terminal, especially a mobile radio terminal, a cordless telephone or the like, with at least one antenna (18; 118) for transmitting or/and receiving signals which is integrally formed on the housing (10; 110), the housing (10; 110) being produced by the method according to one of the preceding claims.

17. Mobile communication terminal, especially a mobile radio terminal, cordless telephone or the like, with a housing (10; 110) and at least one antenna (18; 118) for transmitting or/and receiving signals which is integrally formed on the housing, the housing (10; 110) being produced by the method according to one of Claims 1 to 15.

## Revendications

1. Procédé de fabrication d'un boîtier (10; 110) d'un terminal de communication mobile, en particulier d'un terminal radioélectrique mobile, d'un téléphone sans fil ou analogue, comportant au moins une antenne (18 ; 118) d'un seul tenant avec le boîtier (10; 110) et destinée à émettre et recevoir des signaux, le procédé comportant les étapes suivantes consistant à :
A) fabriquer une ébauche de boîtier (124) en un matériau électriquement non conducteur ayant une zone d'antenne (126₁, 126₂, 126₃, 126₄) destinée à loger l'antenne (18 ; 118) et
B) doter l'ébauche de boîtier (124) dans la zone d'antenne d'un matériau d'antenne électroconducteur (118₁, 118₂, 118₃, 118₄),
**caractérisé en ce que**, à l'étape B, la surface (20) de l'ébauche de boîtier est métallisée sélectivement dans la zone d'antenne prévue sur cette ébauche et
**en ce que** la zone d'antenne est conformée avec au moins un creux (126₁, 126₂, 126₃, 126₄) ou évidement qui est ménagé dans l'ébauche de boîtier (124) et dont la géométrie correspond à la géométrie de l'au moins une antenne (118).

2. Procédé selon l'une des revendications précédentes, **caractérisé en ce que** l'ébauche de boîtier (124) est fabriquée en une matière plastique, en particulier par moulage par injection.

3. Procédé selon l'une des revendications précédentes, **caractérisé en ce que** les étapes A et B sont réalisées par un procédé de moulage par injection à deux composants, une matière plastique électriquement non conductrice étant traitée à l'étape A comme premier composant pour donner l'ébauche de boîtier et une matière plastique conductrice étant injectée à l'étape B en tant que deuxième composant dans la zone d'antenne.

4. Procédé selon l'une des revendications 1 à 3, **caractérisé en ce que** le matériau électriquement conducteur (118₁, 118₂, 118₃, 118₄) est appliqué à l'étape B sur l'ébauche de boîtier par estampage à chaud.

5. Procédé selon la revendication 4, **caractérisé en ce que** l'étape B comporte les sous-étapes suivantes :
B1) application en excès d'un matériau plan électriquement conducteur sur la zone d'antenne,
B2) pressage à plat du matériau électriquement conducteur sur la surface de l'ébauche de boîtier à l'aide d'un poinçon conformé selon la géométrie de la zone d'antenne,
B3) fusion locale du matériau de l'ébauche de boîtier sur la surface en contact avec le matériau électriquement conducteur dans la zone du poinçon,
B4) durcissement du matériau fondu de l'ébauche de boîtier, et
B5) élimination du matériau électriquement conducteur saillant au-dessus de la zone d'antenne.

6. Procédé selon la revendication 4, **caractérisé en ce que** le matériau électriquement conducteur à l'étape B1 est un matériau se présentant sous la forme d'une feuille métallique, en particulier du cuivre pur ou bien du cuivre revêtu de Sn, Pb, Ni, Ag et/ou Au.

7. Procédé selon l'une des revendications 1 ou 2, **caractérisé en ce que** l'ébauche de boîtier est dotée à l'étape B dans la zone d'antenne de structures en matériau électriquement conducteur réalisées par laser.

8. Procédé selon la revendication 7, **caractérisé en ce que** l'étape B comporte les sous-étapes suivantes :
B1) application d'un matériau électriquement conducteur dans la zone d'antenne et dans la zone entourant celle-ci et
B2) élimination du matériau électriquement conducteur dans la zone entourant la zone d'antenne par brûlage local au moyen d'un faisceau laser.

9. Procédé selon la revendication 8, **caractérisé en ce qu'**un vernis électriquement conducteur est appliqué à l'étape B1 dans la zone d'antenne.

10. Procédé selon la revendication 8, **caractérisé en ce que** du matériau électriquement conducteur, en particulier un métal, est déposé galvaniquement l'étape B1.

11. Procéder selon l'une des revendications 1 ou 2, **caractérisée en ce que** l'étape B) comporte les sous-étapes :
B1) application d'un masque sur l'ébauche de boîtier, le masque comportant un creux d'antenne dont la géométrie correspond à la géométrie de la zone d'antenne,
B2) dépôt d'un matériau électriquement conducteur sur le masque dans la zone du creux d'antenne de sorte que la zone d'antenne de l'ébauche de boîtier soit totalement revêtue de matériau électriquement conducteur déposé et
B3) élimination du masque.

12. Procédé selon la revendication 11, **caractérisé en ce qu'**un vernis électriquement conducteur est déposé sur le masque à l'étape B2.

13. Procédé selon la revendication 11, **caractérisé en ce que** le matériau électriquement conducteur, en particulier un métal, est déposé galvaniquement à l'étape B2.

14. Procédé selon l'une des revendications 1 ou 2, **caractérisé en ce que** l'étape B) comprend les sous-étapes :
B1) application d'un masque sur l'ébauche de boîtier, le masque comportant un évidement d'antenne dans la géométrie correspond à la géométrie de la zone d'antenne,
B2) dépôt d'un matériau photosensible, en particulier d'un photorésist électrophorétique, sur le masque dans la zone de l'évidement d'antenne de sorte que la zone d'antenne de l'ébauche de boîtier soit totalement revêtue de matériau photosensible déposé, le matériau photosensible pouvant être mis à l'état conducteur par exposition,
B3) exposition du matériau photosensible déposé et
B4) élimination du masque.

15. Procédé selon la revendication 14, **caractérisé en ce que** le matériau déposé est fixé à l'ébauche de boîtier après l'une des étapes B2), B3) ou B4).

16. Boîtier (10 ; 110) pour terminal de communication mobile, en particulier pour terminal radioélectrique mobile, téléphone sans fil ou analogue, comportant au moins une antenne (18 ; 118) conformée solidairement sur le boîtier (10 ; 110) et destinée à émettre et/ou recevoir des signaux, le boîtier (10 ; 110) étant réalisé par le procédé selon l'une des revendications précédentes.

17. Terminal de communication mobile, en particulier terminal radioélectrique mobile, téléphone sans fil ou analogue, comportant un boîtier (10 ; 110) et au moins une antenne (18 ; 118) conformée solidairement sur le boîtier (10 ; 110) et destinée à émettre et/ou recevoir des signaux, le boîtier (10 ; 110) étant réalisé par le procédé selon l'une des revendications 1 à 15.
